# FASCICULE DE BREVET EUROPEEN

(11) **EP 3 191 737 B1**
(45) Date de publication et mention de la délivrance du brevet: **19.02.2020**
(21) Numéro de dépôt: 15760220.2
(22) Date de dépôt: 20.08.2015
(51) Int. Cl.: F16H 35/00, B07C 3/00, B65H 29/40, B65H 29/60, B65H 31/06, F16H 35/02

(54) **TRANSMISSION MECANIQUE POUR UNE UNITE D'EMPILAGE DU COURRIER AVEC UN EMBRAYAGE-FREIN ET UN ENGRENAGE ELLIPTIQUE**
MECHANISCHES GETRIEBE FÜR EINE POSTSTAPELANLAGE MIT EINER KUPPLUNGSBREMSE UND ELLIPTISCHEN ZAHNRÄDERN
MECHANICAL TRANSMISSION FOR A MAIL-STACKING UNIT, COMPRISING A CLUTCH-BRAKE AND ELLIPTICAL GEARS

(30) Priorité: 09.09.2014 FR 1458424
(43) Date de publication de la demande: 19.07.2017
(73) Titulaire: Solystic, 92220 Bagneux (FR)
(72) Inventeur: BEAUGRAND, Wilfrid, 26000 Valence (FR)
(74) Mandataire: Prugneau, Philippe
(86) Numéro de dépôt international: PCT/FR2015/052232
(87) Numéro de publication internationale: WO 2016/038268

(56) Documents cités:
- WO-A1-2013/093250
- FR-A1- 2 284 439
- JP-A- H10 175 097
- JP-A- S63 172 057

## Description

### Domaine technique

L'invention concerne une unité d'empilage comprenant un actionneur d'empilage entrainé en rotation de manière saccadée pour empiler sur chant des objets plats dans un réceptacle de stockage.

L'invention s'applique plus particulièrement à l'empilage d'articles de courrier plats mais peut s'appliquer à d'autres objets plats comme par exemple des billets de banque.

Une machine de tri postal peut comprendre un grand nombre de sorties de tri. Dans les machines de tri postal pour les petits plis par exemple, chaque sortie de tri peut être constituée d'un empileur comme indiqué plus haut.

Le réceptacle de stockage de l'empileur peut contenir un grand nombre de plis et jusqu'à environ vingt kilogrammes de courrier en pile sur chant. Cet empileur est apte à empiler en tête de pile, un nouveau pli qui est amené par un convoyeur sur chant dans la sortie de tri considérée. Généralement, le convoyeur sur chant est un convoyeur à bandes de pincement.

### Technique antérieure

Un tel empileur pour machine de tri postal est par exemple décrit dans le brevet WO-2013093251 ou encore dans le brevet WO-2013093250.

Dans cet empileur connu, l'actionneur d'empilage électromécanique est une sorte de roue à godets qui tourne par saccade d'un demi-tour à chaque fois.

A chaque demi-tour de la roue à godets, un godet vient prendre en charge un nouveau pli à empiler pour l'empiler au dessus de la tête de pile de plis dans le réceptacle de stockage tout en poussant la tête de pile ce qui libère de l'espace pour l'insertion du nouveau pli à empiler.

La roue à godets qui tourne de manière saccadée par demi tour et s'arrête entre chaque demi-tour, peut avoir une cadence d'empilage qui peut être très élevée et jusqu'à présent on a utilisé des moteurs électriques très sophistiqués à variateur électronique pour entraîner à vitesse variable la roue à godets de l'empileur.

Un tel moteur électrique à variateur électronique est très couteux, limité en puissance et complexe à faire fonctionner. Par ailleurs, il consomme de l'énergie permanente pour alimenter l'électronique et nécessite d'évacuer l'énergie de freinage. Il pose aussi des problèmes de fiabilité de l'électronique et de compatibilité électromagnétique.

On connait également des actionneurs mécaniques tels que divulgués dans les documents JPH10175097 et JPS63172057.

Le but de l'invention est de remédier à ces inconvénients.

### Résumé de l'invention

L'idée à la base de l'invention est d'une part d'accoupler la transmission mécanique de la roue à godets à un embrayage-frein classique entraîné à vitesse constante et d'autre part d'accoupler l'embrayage-frein à la roue à godets à travers un engrenage elliptique constitué d'un pignon elliptique et d'une roue dont le profil est conjugué de celui du pignon (polygastéroïde).

Plus généralement, l'invention a pour objet un ensemble de transmission mécanique pour entraîner un actionneur à un mouvement de rotation de manière saccadée, caractérisé en ce qu'il comprend un engrenage elliptique conçu pour être accouplé entre ledit actionneur et un embrayage-frein lequel a un arbre d'entrée entrainé en rotation à vitesse constante et en ce que l'engrenage elliptique comprend un pignon elliptique et une roue polygastéroïde ayant un profil conjugué de celui du pignon et en ce que l'embrayage a un axe de sortie qui passe par un foyer du pignon elliptique et l'actionneur a un axe d'entrée qui passe par le centre de la roue, et en ce que l'ensemble de transmission comprend en outre une commande électronique qui commande le freinage et l'arrêt de l'embrayage-frein à chaque demi-tour de l'actionneur détecté par un capteur de position angulaire de la roue ou du pignon.

Avec cet agencement à engrenage elliptique, on peut faire réaliser un demi-tour à l'actionneur rotatif sans à-coups au démarrage ni à l'arrêt, en assurant une position d'arrêt précise dans des conditions de charge variable. On supprime l'effet de roue-libre entre les phases d'embrayage et de freinage car l'engrenage elliptique a un rapport de vitesse progressif.

Au repos, le rapport de vitesse mené/menant est minimal (très inférieur à 1). Le démarrage se fait donc à faible vitesse et à fort couple. Puis la vitesse de la charge croît progressivement, passe par un maximum (le rapport de vitesse est alors voisin de 1) puis décroît symétriquement jusqu'à l'arrêt.

Sur cette base, une unité d'empilage d'objets plats, par exemple adaptée pour des sorties de tri d'une machine de tri postal, avec un actionneur d'empilage du type roue à godets pour empiler sur chant les articles de courrier dans un réceptacle de stockage, peut avantageusement comprendre un ensemble de transmission mécanique comme indiqué plus haut pour entraîner l'actionneur d'empilage en mouvement de rotation de manière saccadé.

Avec cet agencement, on n'a donc pas besoin d'électronique d'asservissement pour réaliser le cycle de rotation de la roue à godets pendant l'empilage des articles de courrier dans le réceptacle de l'empileur.

Avec cet agencement, la commande électronique/logiciel de l'actionneur permet
- de garantir le cycle désiré d'empilage (en durée et en précision d'arrêt);
- de maintenir la roue à godets en position de repos entre deux empilages;
- de recaler la roue à godets en position en cas d'arrêt/redémarrage de la machine de tri dans laquelle est installé l'unité d'empilage;
- de faciliter le débourrage manuel par l'opérateur de l'unité d'empilage;
- d'inhiber une sortie de tri si nécessaire de la machine de tri.

Cet agencement permet aussi de limiter le nombre de capteurs et leur complexité, de simplifier le réglage éventuel du cycle d'empilage, et de limiter la consommation électrique de l'unité d'empilage.

L'ensemble de transmission mécanique selon l'invention peut présenter les particularités suivantes :
- les axes de sortie et d'entrée sur le pignon et la roue de l'engrenage elliptique sont alignés avec un point de contact mutuel du pignon avec la roue;
- ledit capteur de position peut être un capteur optique;
- ledit capteur de position peut être un capteur magnétique;
- ledit capteur de position peut être un capteur capacitif.

L'invention sera encore mieux comprise à la lecture de la description qui suit d'un exemple de réalisation de l'invention illustré par les dessins.

### Présentation sommaire des dessins

La figure 1 illustre de façon très schématique une unité d'empilage avec un actionneur rotatif de type roue à godets pour une unité d'empilage du courrier dans une sortie de tri d'une machine de tri postal.
La figure 2 illustre le principe de l'engrenage elliptique selon l'invention.
La figure 3 illustre un premier exemple de montage de l'engrenage elliptique avec un embrayage-frein par exemple pour l'empileur de la figure 1.
La figure 4 illustre un second exemple de montage de l'engrenage elliptique avec un embrayage-frein.
La figure 5 illustre l'évolution de la vitesse de rotation de l'actionneur en fonction de la position angulaire du pignon.
La figure 6 illustre un engrenage elliptique avec une roue polygastéroïdale munie de zones de détection pour détecter la position angulaire de l'actionneur.
La figure 7 est un chronogramme pour illustrer la commande électronique/logiciel de l'actionneur.

### Description des modes de réalisation

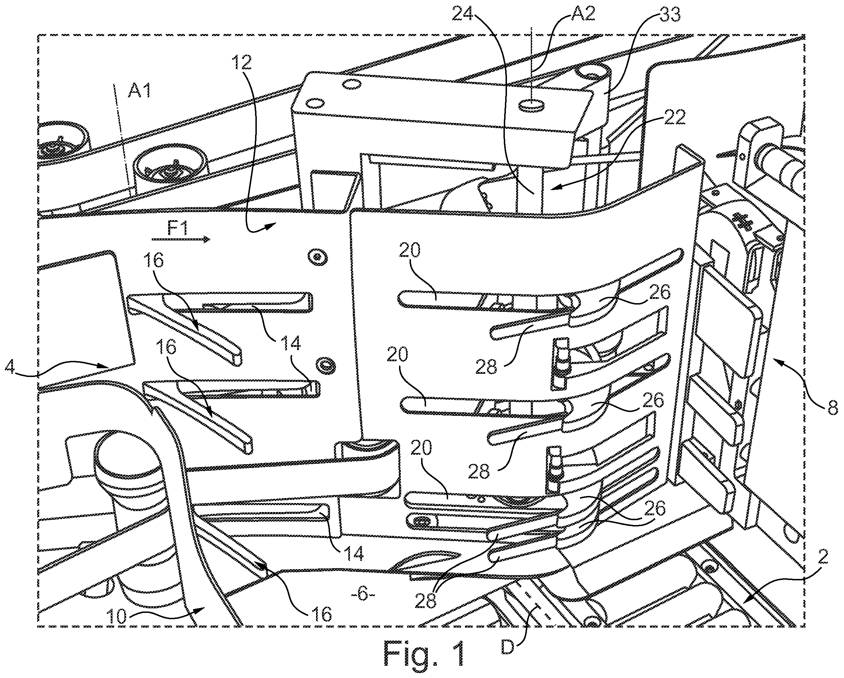

Sur la figure 1, on a illustré à titre d'exemple uniquement, un dispositif d'empilage pour objets postaux plats avec un actionneur électromécanique du type roue à godets.

Le dispositif d'empilage comprend tout d'abord un châssis fixe, désigné par la référence 2. On retrouve également un couloir d'entrée 4, assurant l'arrivée des objets postaux plats, plus particulièrement ici des plis ou des lettres petits et/ou grand format.

De façon typique, cette entrée est mise en communication avec un dispositif de convoyage, non représenté, appartenant à une machine de tri postal de type classique.

Ce dispositif d'empilage définit en outre une zone 6 de réception et de stockage des objets, laquelle est bordée latéralement par une rive de taquage 8, contre laquelle les objets plats prennent appui, ainsi que par une rive de retenue 10. On note en outre D la direction longitudinale du dispositif, le long de laquelle la pile d'objets plats se déplace au fur et à mesure de sa formation.

Une plaque 12, formant rive de glissement, permet de guider selon la flèche F1 le flux d'objets admis depuis l'entrée 4 en direction de la zone 6.

La plaque 12 est creusée, dans sa partie amont en référence au sens de progression des objets, d'une première série de fentes 14. Ces dernières permettent le passage de plusieurs volets 16, qui sont prévus au nombre de trois dans l'exemple illustré. Ces volets sont susceptibles de pivoter autour d'un axe vertical A1, qui s'étend au voisinage de la face arrière de la plaque 12.

Comme cela sera explicité plus en détail dans ce qui suit, chaque volet peut pivoter autour de l'axe A1, entre deux positions. La première de celles-ci est une position rétractée, dans laquelle les volets sont escamotés derrière la plaque 12, à savoir qu'ils ne font pas saillie dans le couloir d'entrée 4 et n'interfèrent donc pas sur l'avancée des objets. Dans la seconde position, qui est dite avancée, les volets font saillie dans le couloir de façon à influer sur le trajet des objets, comme on le verra dans ce qui suit.

La plaque 12 est en outre creusée, dans sa partie aval, d'une seconde série de fentes 20. Ces dernières coopèrent avec un actionneur 22, susceptible d'être entraîné en rotation autour d'un axe vertical A2, qui est placé à distance de la plaque, à l'opposé de la zone de réception 6.

Cet actionneur électromécanique 22 comprend un moyeu central 24, à partir duquel s'étendent plusieurs couples d'ergots 26, dont un seul est visible sur cette figure. Ces derniers sont susceptibles de faire saillie en direction de la zone de réception, via les fentes précitées 20. De plus, ces ergots sont légèrement recourbés de façon à être orientés en direction du couloir d'arrivée, lorsqu'ils s'étendent au travers de ces fentes.

De façon plus précise, on retrouve dans l'exemple illustré quatre couples de tels ergots 26, répartis le long du moyeu 24. Par ailleurs, pour un couple donné, les deux ergots s'étendent de façon symétrique, en étant donc décalés mutuellement de 180°.

Chaque ergot 26 est associé à une languette 28, qui est rapportée de façon avantageusement amovible, par exemple par vissage. Les languettes peuvent alors être réalisées en un matériau différent de celui des ergots, notamment en une matière plastique alors que les ergots sont métalliques.

De la sorte, les languettes peuvent présenter des caractéristiques adaptées à leur fonction, tout en étant aisément remplaçables.

Chaque languette 28 présente une portion de forme recourbée, en vue de sa fixation sur l'ergot, ainsi qu'une partie principale rectiligne qui s'étend tangentiellement à un cercle centré sur l'axe A2 et dont le rayon est compris entre 60mm et 80mm. Les ergots 26 avec les languettes 28 forment une sorte de roue à godets qui vient prendre comme un godet chaque objet plat venant du couloir d'entrée 4 pour l'insérer sur le dessus de la pile d'objets plats dans la zone 6 de stockage de l'empileur.

L'extrémité longitudinale de la zone de réception, opposée à l'actionneur, est définie par une palette (non illustrée sur la figure 1) formant un élément de retenue à l'arrière de la zone de stockage des objets plats sur chant.

Cette palette est mobile par rapport au châssis 2, selon la direction D, en étant montée sur un guide. Par ailleurs, des moyens non représentés, du type enrouleur ou contrepoids, sont associés à la palette afin qu'elle exerce une force de rappel sur la pile d'objets, de manière à en assurer la retenue de la pile.

Selon l'invention, l'actionneur d'empilage 22 est accouplé en rotation ici à un arbre motorisé par l'intermédiaire d'un embrayage-frein entrainé à vitesse constante par l'arbre motorisé et un engrenage elliptique est prévu entre l'embrayage-frein et ledit actionneur d'empilage.

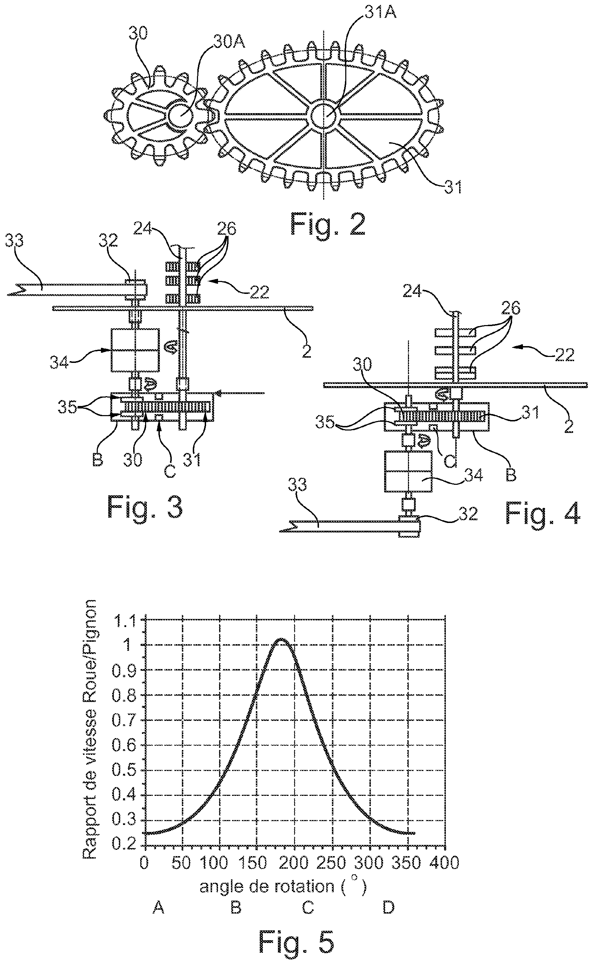

Sur la figure 2, on a illustré de façon très schématique un engrenage elliptique selon l'invention qui comprend un pignon elliptique 30 engrené sur une roue polygastéroïdale 31 ayant un profil conjugué de celui du pignon 30.

Comme visible sur la figure 2, le pignon 30 a un axe de rotation 30A situé à un foyer du pignon elliptique et la roue 31 a un axe de rotation 31A qui est central. Le point de contact ou d'engrenage entre le pignon 30 et la roue 31 est aligné avec les axes 30A et 31A.

Les dentures du pignon et de la roue sont calculées spécifiquement en fonction de l'équation mathématique des profils du pignon et de la roue. Les dimensions du pignon et de la roue sont homothétiques et peuvent être adaptées au besoin.

La dimension minimale est imposée par la résistance de la denture, en fonction de la charge correspondant à l'actionneur. La dimension maximale est limitée uniquement par l'inertie.

Le pignon et la roue peuvent être réalisés en matériau plastique moulé. Dans les cas de forte charge ou d'encombrement très réduit, le pignon et/ou la roue peuvent être réalisés en métal ou bien comporter deux étages.

Selon l'invention, le pignon et la roue peuvent être intégrés dans un boîtier B représenté sur les figures 3 et 4 comportant un arbre d'entrée et un arbre de sortie.

L'arrêt de l'embrayage-frein est commandé après un angle de rotation fixe qui ne dépend que du temps de freinage de l'embrayage-frein (et non de la charge).

Un capteur élémentaire C (optique, magnétique ou capacitif suivant les cas) peut être intégré au boîtier (voir figures 3 et 4) pour détecter la position angulaire de la roue 31. Le capteur C est agencé pour repérer un point particulier de la roue 31 (un trou, un réflecteur, une zone métallique... suivant le type de capteur) ou bien un disque indexé sur la roue ou sur le pignon. Ce signal de détection sert à déclencher la commande de freinage de l'embrayage-frein 34. La position du capteur C ou du repère correspondant peut être réglée de façon à pouvoir adapter le montage aux caractéristiques dynamiques de l'embrayage-frein et garantir une bonne précision d'arrêt.

L'excentricité "e" du pignon 30 est choisie de façon à offrir une plage de vitesse suffisante sans générer de pic de vitesse trop élevée, par exemple de l'ordre de 0,4 à 0,5. On comprend donc que le pignon elliptique est d'autant plus aplati que son excentricité 'e' est grande (équation polaire : r=p/[1+e cos(θ)] où p est un paramètre dimensionnel) et comporte un axe 30A d'entraînement qui coïncide avec un de ses deux foyers.

La roue 31 est de forme conjuguée (équation polaire : r = 4p / [k-1-e cos(2 θ)] avec k=1+√[4 - 3e²]) au pignon 30 et comporte un axe de rotation 31A qui coïncide avec son centre.

Le choix de l'excentricité (paramètre 'e') du pignon détermine l'amplitude de variation du rapport de vitesse et la progressivité de l'engrenage et le choix du paramètre dimensionnel 'p' permet de fixer les dimensions et l'entraxe entre les axes du pignon et de la roue à volonté, sans changer l'excentricité et donc la progressivité de l'engrenage.

Maintenant sur la figure 3, on a représenté un arbre de transmission motorisé 32, ici un arbre entraîné par une bande motorisée 33 montée sur le dessus du châssis 2 de l'empileur, qui est accouplé en entrée d'un embrayage-frein 34 lequel est accouplé en sortie au pignon 30 de l'engrenage elliptique.

La roue 31 de l'engrenage elliptique est accouplée en sortie à l'actionneur rotatif 22 par l'arbre de transmission 24.

Sur la figure 4, la bande 33 entrainant l'arbre 32 est montée sous le châssis 2 de l'empileur. L'arbre est encore accouplé en entrée à l'embrayage-frein 34 lequel est accouplé en sortie au pignon 30. La roue 31 est accouplée en sortie à l'actionneur rotatif 22 par l'arbre de transmission 24.

Une ou plusieurs masselottes 35 peuvent être prévues de chaque côté du pignon elliptique 30 pour éliminer les balourds. Le pignon 30 et la roue 31 de l'engrenage elliptique peuvent être réalisés en matière légère, comme du plastique, et dans ce cas les masselottes 35 servent à augmenter l'inertie du pignon 30 afin de maintenir le couple par effet inertiel lors de la phase de roue libre de l'embrayage-frein.

Si on se réfère à la figure 5, sur un cycle d'empilage, la roue 31 tourne de 1/2 tour tandis que le pignon 30 tourne d'un tour complet. Sur cette figure 5, l'excentricité "e" du pignon est égale à 0,44.

Plus particulièrement, pendant la phase A sur la figure 5, l'embrayage-frein 34 est embrayé et la roue 31 démarre à faible vitesse depuis sa position de repos. Pendant la phase B sur la figure 5, la roue 31 a effectué un quart de tour et atteint sa vitesse maximale (le pignon 30 a fait un ½ tour).

Pendant la phase C, la roue à godet 26 pousse le pli dans la pile. Suite à la détection de position par le capteur C, le freinage de l'embraye frein est déclenché pour que la roue 31 finisse son demi-tour avec précision.

Pendant la phase D, la roue à godet 26 finit de pousser le pli dans la pile et s'arrête à faible à faible vitesse jusqu'en position de repos.

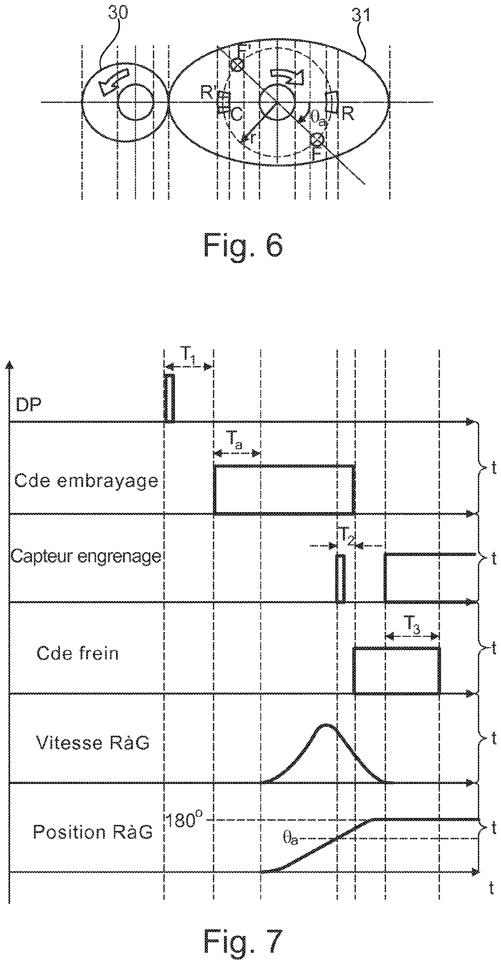

Sur la figure 6, on a illustré l'engrenage elliptique selon l'invention avec la roue polygastéroïdale 31 qui est munie de zones de détection pour un capteur C de détection, ici par exemple un capteur avec une cellule photoélectrique C qui interagit avec des zones sensibles F, F' constituées de deux performations diamétralement opposées dans un disque apposé coaxialament sur la roue 31 de l'engrenage.

Les deux performations F, F' sont ici à une certaine distance r de l'axe de la roue 31 de l'engrenage et en avance d'un angle θa dans le sens de la rotation de la position de référence de freinage de l'embrayage-frein ce qui permet de détecter à chaque demi tour cette position de référence de freinage.

Le freinage de l'embrayage-frein doit être déclenché lorsque la roue à godets 26 a parcouru un angle θf qui est tel que la roue à godets termine sa course avec la précision souhaitée.

Compte tenu de la charge variable qui influe sur le freinage, l'angle θf est réglé à vide de façon à ce que la fin de course de la roue à godet coïncide avec la position d'arrêt maximale autorisée, par exemple 185°.

Par conséquent, on comprend qu'on dispose d'une plage angulaire R, R' (par exemple de 10° pour une précision d'arrêt de +/-5°) pour assurer un arrêt suffisamment précis dans les différents cas de charge possibles.

En pratique l'angle θf est susceptible de varier d'un embrayage-frein à l'autre du fait d'une dispersion de production et d'une dispersion de vieillissement ce qui implique de choisir un angle θa supérieur à l'angle maximal θf pour affiner ensuite le réglage de l'angle θf en retardant plus ou moins le déclenchement du freinage de l'embrayage-frein à partir d'une détection de l'angle θa.

A noter que la dissymétrie de l'engrenage elliptique autorise la détection angulaire de position sur la roue ou sur le pignon de l'engrenage elliptique mais une détection de position angulaire du côté de la roue de l'engrenage qui est normalement de plus grand diamètre que le pignon procure une précision accrue.

Le capteur C peut aussi servir à détecter la position zéro de la roue à godets 26 si les plages R,R' sont des zones de détection pour le capteur C.

Cette détection des zones R,R' permet de supprimer la commande de frein une fois le cycle de rotation terminé ce qui contribue à réduire la consommation électrique de cette commande tout en empêchant une variation importante de la position de la roue à godets en cas d'intervention de l'Opérateur sur la pile de courrier dans l'unité d'empilage.

Cette détection autorise aussi un auto réglage de l'angle θf de déclenchement du freinage car la détection du point zéro permet d'enclencher une séquence automatique de cycles à vide durant laquelle la temporisation suivant la détection de l'angle θa sera progressivement augmentée jusqu'à atteindre le début de la zone zéro.

Cette détection des zones R,R' par le capteur C permet aussi d'enclencher un cycle à vide pour recaler la roue à godets avant une nouvelle phase d'empilage et de surveiller et signaler des occurrences trop importantes de situations où la position zéro n'est pas atteinte au cours des cycles de rotation successifs.

Typiquement, l'embrayage-frein 34 peut avoir une durée d'activation Ta d'environ 16 ms, pendant laquelle un article de courrier qui entre dans le couloir d'entrée 4 de l'unité d'empilage parcourt moins de 70 mm à la vitesse maximale de 4 m/s.

Cette distance est bien inférieure à la distance entre la position d'un détecteur de passage du courrier dans l'empileur, par exemple associé aux volets 16, et celle de l'axe 33 de la roue à godets 26.

Pour enclencher un cycle de rotation de la roue à godets 26, on doit anticiper la commande avec une temporisation T1 réglable entre la détection par le capteur de passage du front avant de l'article de courrier et l'alimentation effective de l'embrayage-frein.

Sur la figure 7, on a illustré par un chronogramme les différentes phases de la commande électronique/logiciel de l'embrayage-frein à partir de la détection du passage DP d'un article de courrier dans l'unité d'empilage.

Après la temporisation T1, la bobine de commande de l'embrayage-frein est activée sur une durée d'activation Ta.

Après chaque activation de la commande de l'embrayage-frein, on détecte que la roue à godet 26 (RàG sur la figure 7) a atteint la position angulaire θa pour enclencher une nouvelle temporisation T2 à la fin de laquelle le freinage est commandé.

Lorsque la position zéro est détectée à son tour, une nouvelle temporisation T3 est déclenchée à la fin de laquelle l'activation de la bobine de commande de l'embrayage-frein est supprimée. Si la position zéro n'est plus détectée, on commande le freinage.

Ce fonctionnement de la commande permet de garantir le cycle désiré (en durée et en précision d'arrêt), de maintenir la roue à godets en position de repos entre deux empilages, de recaler la roue à godets en position zéro en cas d'arrêt/redémarrage, de faciliter le débourrage manuel par l'Opérateur, d'inhiber une sortie de tri de la machine de tri si c'est nécessaire.

La détection de l'angle θa se fait en fin de cycle, donc à vitesse de rotation réduite, et la détection de la position zéro est, quant à elle, une détection statique.

Pour viser une précision de 0,5° par exemple, au quart de la vitesse d'entraînement de l'embrayage-frein (soit par exemple 350 tr/mn), il faudrait une précision du capteur de 0,5 ms environ (fluctuation possible de 0,5 ms de son temps de réponse).

Il est entendu que le montage des figures 3 et 4 est inversible. En entraînant la roue de l'engrenage par l'arbre motorisé 32 et en plaçant la charge 22 de l'actionneur du côté pignon, le montage est accélérateur d'un rapport moyen de 2 (à chaque demi-tour de la roue, le pignon fait un tour complet). Pour démarrer et s'arrêter en douceur, il convient dans ce cas de déphaser la roue de l'engrenage de 90° en position de repos (le pignon est alors déphasé de 180°).

L'invention s'applique plus particulièrement à un empileur de courrier pour une sortie de tri de machine de tri postal. L'invention pourrait aussi s'appliquer à d'autres dispositifs avec une commande électromotrice qui fait exécuter sur commande un demi-tour à un actionneur rotatif. En particulier l'idée à la base de l'invention de l'utilisation d'un engrenage progressif pour garantir une bonne précision d'arrêt en cycle rapide sous charge variable sans utiliser d'électronique d'asservissement, peut par exemple s'appliquer à un moteur électrique, à un électroaimant ou encore à un vérin.

## Revendications

1. Ensemble de transmission mécanique pour entraîner un actionneur (22) en mouvement de rotation de manière saccadée, **caractérisé en ce qu'**il comprend un engrenage elliptique (30,31) conçu pour être accouplé entre ledit actionneur et un embrayage-frein (34) lequel a un arbre d'entrée entrainé en rotation à vitesse constante et **en ce que** l'engrenage elliptique comprend un pignon elliptique (30) et une roue polygastéroïde (31) ayant un profil conjugué de celui du pignon et **en ce que** l'embrayage a un axe de sortie qui passe par un foyer du pignon elliptique et l'actionneur a un axe d'entrée qui passe par le centre de la roue, et **en ce que** l'ensemble de transmission comprend en outre une commande électronique qui commande le freinage et l'arrêt de l'embrayage-frein à chaque demi-tour de l'actionneur détecté par un capteur (C) de position angulaire de la roue ou du pignon.

2. Ensemble de transmission mécanique selon la revendication 1, **caractérisée en ce que** les axes de sortie et d'entrée sur le pignon et la roue de l'engrenage elliptique sont alignés avec un point de contact mutuel du pignon avec la roue.

3. Ensemble de transmission mécanique selon la revendication 2, **caractérisée en ce que** ledit capteur de position est un capteur optique.

4. Ensemble de transmission mécanique selon la revendication 2, **caractérisée en ce que** ledit capteur de position est un capteur magnétique.

5. Ensemble de transmission mécanique selon la revendication 2, **caractérisée en ce que** ledit capteur de position est un capteur capacitif.

6. Ensemble de transmission mécanique selon la revendication 1, **caractérisée en ce que** le pignon et la roue sont réalisés en un matériau plastique.

7. Unité d'empilage avec un actionneur d'empilage (22) pour empiler sur chant des objets plats dans un réceptacle de stockage, **caractérisée en ce qu'**elle comprend un ensemble de transmission mécanique selon l'une des revendications 1 à 6 pour entraîner l'actionneur d'empilage (22) en mouvement de rotation de manière saccadé.

8. Machine de tri postal, **caractérisée en ce qu'**elle comprend des sorties de tri avec une unité d'empilage selon la revendication 7.

## Patentansprüche

1. Mechanische Getriebeeinheit zum Antreiben eines Betätigers (22) in Rotationsbewegung auf ruckartige Weise,
**dadurch gekennzeichnet,**
**dass** sie ein elliptisches Räderwerk (30, 31) umfasst, das geschaffen ist, um zwischen dem Betätiger und einer Kupplungsbremse (34), die eine bei konstanter Geschwindigkeit in Rotation angetriebene Eingangswelle aufweist, gekoppelt zu werden, und
**dass** das elliptische Räderwerk ein elliptisches Ritzel (30) und ein vielfach ausgebuchtetes Rad (31) mit einem zu dem Ritzel angepassten Profil umfasst, und
**dass** die Kupplung eine Ausgangsachse aufweist, die durch einen Brennpunkt des elliptischen Ritzel durchtritt und der Betätiger eine Eingangsachse aufweist, die durch das Zentrum des Rades hindurchtritt, und
**dass** die Getriebeeinheit ferner eine elektronische Steuerung umfasst, die die Bremsung und das Anhalten der Kupplungsbremse bei jeder durch einen Winkelposition-Sensor (C) des Rades oder des Ritzels erfassten halben Umdrehung des Betätigers steuert.

2. Mechanische Getriebeeinheit nach Anspruch 1, **dadurch gekennzeichnet, dass** die Ausgangs- und Eingangsachsen auf dem Ritzel und dem Rad des elliptischen Räderwerks mit einem gegenseitigen Kontaktpunkt des Ritzels mit dem Rad ausgerichtet sind.

3. Mechanische Getriebeeinheit nach Anspruch 2, **dadurch gekennzeichnet, dass** der Positionssensor ein optischer Sensor ist.

4. Mechanische Getriebeeinheit nach Anspruch 2, **dadurch gekennzeichnet, dass** der Positionssensor ein magnetischer Sensor ist.

5. Mechanische Getriebeeinheit nach Anspruch 2, **dadurch gekennzeichnet, dass** der Positionssensor ein kapazitiver Sensor ist.

6. Mechanische Getriebeeinheit nach Anspruch 1, **dadurch gekennzeichnet, dass** das Ritzel und das Rad aus einem Kunststoffmaterial hergestellt sind.

7. Stapeleinheit mit einem Aufstapelbetätiger (22) zum Aufstapeln auf Kante von flachen Gegenständen in einem Lagerbehältnis, **dadurch gekennzeichnet, dass** sie eine mechanische Getriebeeinheit nach einem der Ansprüche 1 bis 6 zum Antreiben des Aufstapelbetätigers (22) in Rotationsbewegung auf ruckartige Weise umfasst.

8. Postsortiermaschine, **dadurch gekennzeichnet, dass** sie Sortierausgänge mit einer Stapeleinheit nach Anspruch 7 umfasst.

## Claims

1. A mechanical transmission assembly for driving an actuator (22) in rotary motion in stop-start manner, said mechanical transmission assembly being **characterized in that** it comprises elliptical gearing (30, 31) designed to be coupled between said actuator and a clutch brake (34) that has an inlet shaft driven in rotation at constant speed, **in that** the elliptical gearing comprises an elliptical pinion (30) and a polygasteroidal gearwheel (31) having a profile complementary to the profile of the pinion, and **in that** the clutch has an outlet axis that passes through a focus of the elliptical pinion, and the actuator has an inlet axis that passes through the centre of the gearwheel, and **in that** the transmission assembly further comprises an electronic control that controls braking and stopping of the clutch brake every time the actuator turns through one half-turn as detected by a sensor (C) for sensing the angular position of the gearwheel or of the pinion.

2. A mechanical transmission assembly according to claim 1, **characterized in that** the outlet and inlet axes on the pinion and on the gearwheel of the elliptical gearing and a point of mutual contact between the pinion and the gearwheel are in alignment.

3. A mechanical transmission assembly according to claim 2, **characterized in that** said position sensor is an optical sensor.

4. A mechanical transmission assembly according to claim 2, **characterized in that** said position sensor is a magnetic sensor.

5. A mechanical transmission assembly according to claim 2, **characterized in that** said position sensor is a capacitive sensor.

6. A mechanical transmission assembly according to claim 1, **characterized in that** the pinion and the gearwheel are made of a plastics material.

7. A stacker unit having a stacking actuator (22) for stacking flat articles on edge in a storage receptacle, said stacker unit being **characterized in that** it includes a mechanical transmission assembly according to any one of claims 1 to 6 for driving the stacking actuator (22) in a rotary motion in stop-start manner

8. A postal sorting machine, **characterized in that** it has sorting outlets, each of which has a stacker unit according to claim 7.
